# EUROPEAN PATENT SPECIFICATION

(11) **EP 1 577 201 B1**
(45) Date of publication and mention of the grant of the patent: **21.05.2008**
(21) Application number: 04006609.4
(22) Date of filing: 18.03.2004
(51) Int. Cl.: B62J 1/16, B62J 7/04

(54) **A carrier for a bicycle**
Fahrradträger
Support pour bicyclette

(43) Date of publication of application: 21.09.2005
(73) Proprietor: HAMAX AS, 1679 Krakeroy (NO)
(72) Inventor: Ianwillem, Bouknegt, 2317 AK Leiden (NL)
(74) Representative: Popp, Eugen

(56) References cited:
- EP-A- 0 329 136
- EP-A- 0 463 340
- EP-A- 1 040 989
- BE-A- 495 706
- DE-A- 3 343 844
- DE-U- 7 617 628
- DE-U- 9 113 177
- DE-U- 9 208 749
- DE-U- 9 307 555
- DE-U- 20 312 445
- FR-A- 551 978
- GB-A- 191 017 662
- US-A- 5 370 441
- US-A- 5 803 329

## Description

The present invention relates to a carrier for a bicycle and, in particular, to a carrier on which a child seat can be mounted.

The term 'bicycle' which is used herein and in the claims is to be understood in its broadest sense of including both pedal bicycles, mopeds and motorcycles.

DE 91 13 177 U, is considered as the closest prior art, and discloses a carrier assembly according to the preamble of claim 1.

One object of the invention is to provide a carrier for a bicycle which, once fitted, is thereafter readily attachable and detachable, as desired, from the bicycle without the use of tools.

Another object of the invention is to provide a carrier for a bicycle to which a child seat can be secured to provide an improved suspension characteristic over conventional arrangements.

According to the present invention there is provided a carrier for a bicycle comprising a supporting structure to which an object to be carried can be secured; and support means for the supporting structure which can be connected to the bicycle

A first fixation means, securable to a bicycle, is also provided whereby the support means is releasably connectable manually to the first fixation means.

The supporting structure comprises a support plate and a mounting plate, and wherein a chair for a child is mountable to the mounting plate.

Also, a suspension arrangement is located between the support plate and the mounting plate.

Herein, the mounting plate is rotatably connected to the support plate, and the suspension arrangement is relatively movable longitudinally with respect to the support plate.

Preferably, the first fixation means is adapted for permanent fitment to the bicycle.

Preferably also, the first fixation means comprises a projecting mushroom-shaped pin. Such a pin may be screwed to a part of the frame of the bicycle, preferably close to one of the wheel axles.

Preferably also, the support means is releasably connected to the first fixation means by manual rotation of a locking member.

Preferably also, the support means comprise two angled supporting struts. The ends of the supporting struts are preferably connected to the front and rear of the supporting structure, respectively.

Preferably also, the other ends of the supporting struts are connected to the locking member, in particular via a connector.

Preferably also, the locking member is rotatably secured to the connector.

Preferably also, the locking member snap fits around one of the struts to lock the supporting struts to the first fixation means.

Preferably also, the locking member comprises a lug which, on rotation of the locking member to connect the support means to the first fixation means, is moved into a position beneath the first fixation means in order to clamp the first fixation means between the lug and the connector.

Preferably also, a front or rear side of the supporting structure is releasably attachable to a second fixation means, which is preferably also adapted for permanent fitment to the bicycle.

Preferably also, the front or rear side of the supporting structure comprises a projecting means that together with the second fixation means form a hooking arrangement whereby the supporting structure can be releasably secured to the bicycle.

Preferably also, the projecting means comprises a bar and the second fixation means comprises a hook into which the bar can be engaged.

Preferably also, the bar comprises a lip which, when the bar is engaged in the hook prevents disconnection of the bar and thereby the carrier from the bicycle other than by rotation of the carrier upwards with respect to the bicycle.

Preferably also, the hooking arrangement is locked in place by a hinged cover which is preferably rotatably secured to the second fixation means.

Preferably also, the bar can only be disengaged from the hook when the cover is in an open position.

Preferably also, the hinged cover is adapted to engage the bar when the cover is in a closed position to lock the bar in place within the hook.

Preferably, the suspension arrangement is mounted on the supporting structure such that a chair can move back and forth relative to the supporting structure in order to change its suspension characteristic.

Preferably also, the mounting plate is hingedly connected to the support plate. Alternatively, the mounting plate and the support plate are integrally moulded in one piece. In the latter case the mounting plate and the support plate preferably define a C-shaped profile.

Preferably also, the support plate defines an elongate slot along part of its longitudinal axis in which a portion of the suspension arrangement is engaged such that it can be moved back and forth relative to the support plate.

Preferably also, the suspension arrangement comprises a spring or other elastic member.

The present invention will now be described by way of example with reference to the accompanying drawings, in which:-
Fig. 1 is a schematic diagram showing a carrier according to the present invention when attached over the rear wheel of a bicycle;
Fig. 2 is an exploded perspective view, to an enlarged scale, of a lower portion of the carrier shown in Fig. 1;
Figs. 3a and 3b are side views of the arrangement shown in Fig.2 when assembled and a locking member thereof is in a closed position and in an open position respectively;
Fig. 4 is a schematic diagram showing the attachment of a front side of the carrier to the bicycle;
Fig. 5 is an exploded perspective view, to an enlarged scale, of part of the attachment arrangement shown in Fig. 4;
Fig. 6 is a side view of the arrangement shown in Fig. 5 when assembled and a locking cover thereof is in a closed position;
Fig. 7 is a perspective exploded view showing the connection of part of the attachment arrangement shown in Fig. 5 to the carrier;
Figs. 8a and 8b are side views of the assembled arrangement shown in Fig.6 with the locking cover removed and indicating how the attachment arrangement can be unfastened;
Fig. 9 is a perspective view, to an enlarged scale, of a part of a carrier according to the present invention on which a first embodiment of child seat has been mounted;
Fig. 10 is side view similar to Fig. 9 but to a slightly reduced scale showing the mounting of a second embodiment of child seat; and
Fig. 11 is a view similar to Fig. 10 but of a third embodiment of child seat.

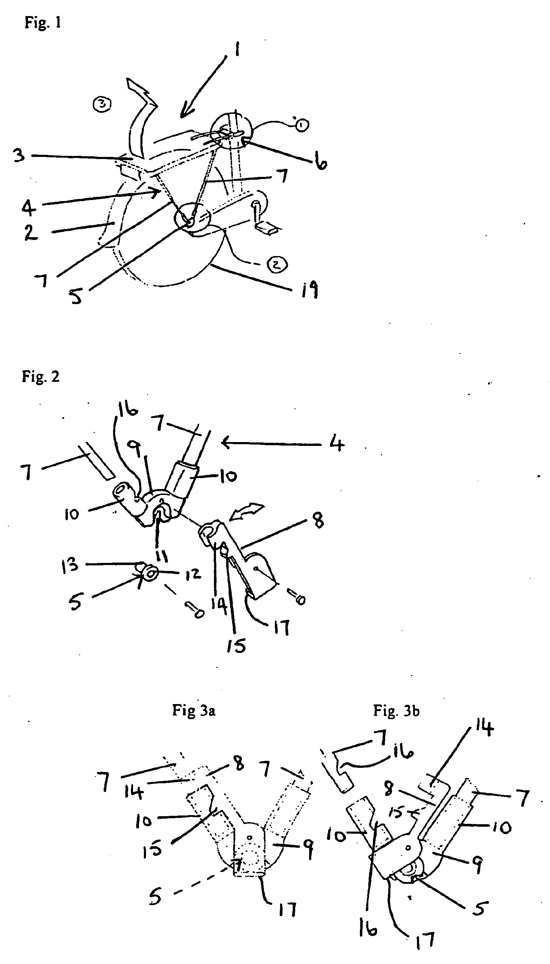

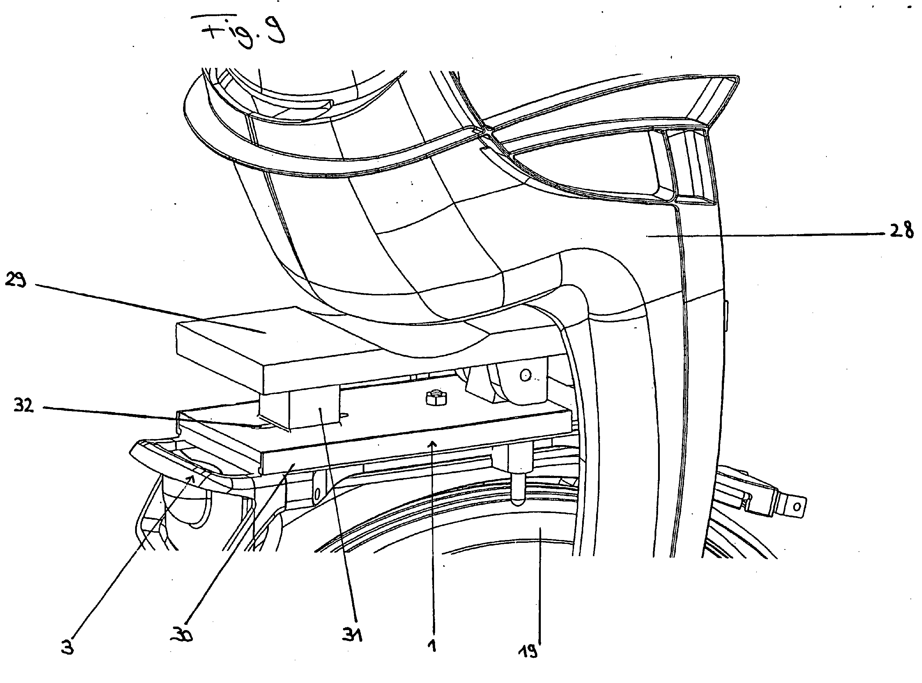

With reference to Fig. 1, a carrier 1 for a bicycle 2 according to the invention comprises a supporting structure 3 to which an object to be carried can be secured. The supporting structure 3 may simply comprise a framework or platform, as shown in Fig. 1, to which objects can be strapped or, in more sophisticated embodiments of the carrier, may comprise a pannier basket or a child's seat, as shown in Figs 9. to 11 and as described in greater detail below.

The supporting structure 3 is provided with a support means 4, which can be releasably connected to a first fixation means 5 secured to the bicycle, and a hooking attachment 6 at one side thereof, which can also be releasably secured to the bicycle. These arrangements will now be described.

First with reference to Figs. 2, 3a and 3b, the support means 4 comprise two angled supporting struts 7 the upper ends of which are respectively connected to the front and rear of the supporting structure 3. The other, lower ends of the struts 7 are connected to a locking member 8 via a connector 9. The connector 9 comprises an inverted U-shaped connecting piece to each side of which is attached a short tube 10 into which the lower ends of the struts 5 are push-fitted and secured. Pivotally mounted to a central portion of the connector 8 is the locking member 8, as is further described below. The bight 11 defined by the U-shaped connecting piece 9 is adapted to fit around the first fixation means 5, which is adapted for permanent fitment to the bicycle. As shown in Figs. 2, 3a and 3b, these means 5 comprise a projecting, mushroom-shaped pin that is screwed to the frame of the bicycle close to the axle of the back wheel. The pin defines a head 12 and a stem 13 around which the bight 11 fits so that the head 12 retains the connector 9 in place.

The locking member 8, which is preferably integrally moulded from a resiliently deformable material such as plastics, comprises a clamp portion 14, which can be snap-fitted around one of the struts 7. Preferably, the locking member 8 engages the rearward strut 5 with respect to the bicycle 2. The locking member 8 also comprises a projecting nose or catch 15 which, when the clamp portion 14 is snap-fitted around the strut 7 engages in a complementarily shaped cut-away portions 16 of the same strut 7 and the tube 10 in which it is secured. In addition, the locking member 10 defines a projecting lug 17, which is located on the opposite end of the member 8 to the clamp portion 14 and which projects normally to the main body of the member 8. When the locking member 8 is manually rotated so that the clamp portion 14 snap-fits around the strut 7 and the catch nose 15 engages in the cut-away portions 16, the lug 17 is also moved into a position beneath and in contact with the head 12 of the mushroom-shaped pin 5. To this end, the locking member 8 may comprise be obliquely angled about its pivot point. Hence, the locking member 8 operates so that when the connector 9 is engaged over the fixation means 5 and the clamp portion 14 and the nose 15 are engaged with the strut 7, the lug 17 of the locking member 8 engages the head 12 so that the support means 4 is secured clamped around the fixation means 5. Equally, manual rotation of the locking member 80 to disengage it from the strut 7 also moves the lug 17 away from a clamping position with respect to the fixation means 5 to free the support means 4 of the carrier 1 from the bicycle 2.

In addition to the foregoing, a second fixation means 18 is also provided for the releasable attachment of a front or rear side of the supporting structure 3 to the bicycle 2. In the illustrated embodiments, the second fixation means 18 connects the front of the structure 3 to the bicycle 2 so that the carrier 1 is disposed above a rear wheel 19 of the bicycle. However, it will be readily appreciated that a suitably adapted carrier 1 could be arranged to be located above the front wheel of the bicycle and in this case the second fixation means 18 are connected to the rear of the structure 3.

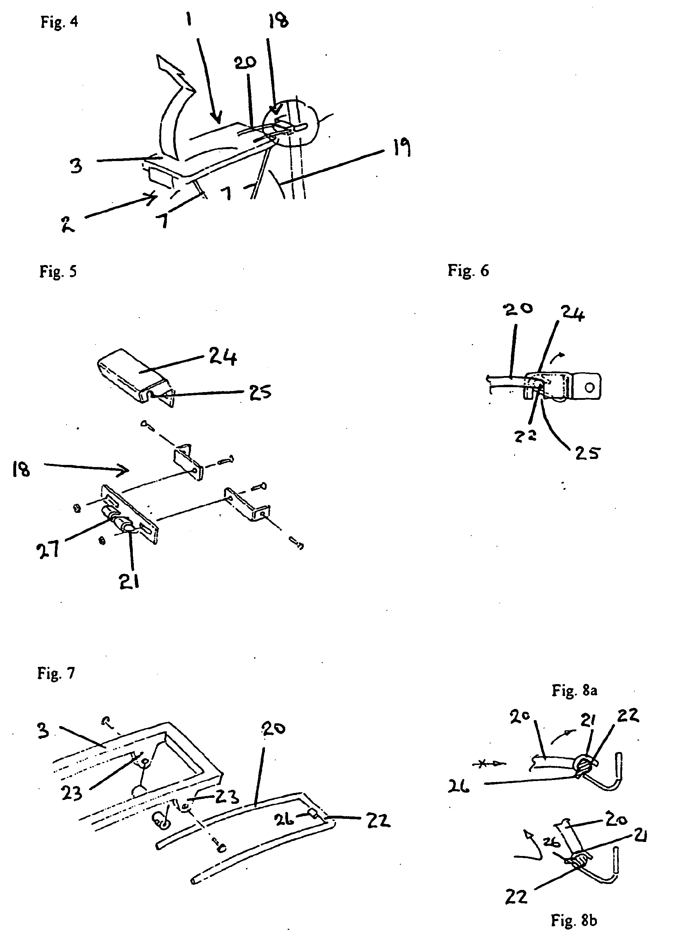

Hence, in the present embodiment and as shown in Figs. 4 to 6, the front side of the supporting structure 3 comprises a projecting means 20 that together with the second fixation means 18 form a hooking arrangement whereby the supporting structure can be releasably secured to the bicycle.

In the present embodiment the second fixation means 18 comprises a bracket arrangement that is screwed to the frame of the bicycle and that comprises a hook 21. The projecting means 20 comprises a projecting loop including a bar 22 which can be engaged in the hook 21 to fasten the front of the structure 3 to the bicycle. The loop 20 is screwed at its ends to lugs 23 that depend from the supporting structure 3, as shown in Fig. 7.

In order to retain the bar 22 within the hook 21 whilst the bicycle is in use, a hinged cover 24 is rotatably secured to the fixation means 18. It will be appreciated that the bar 22 can only be disengaged from the hook 21 when the cover 24 is in an open position. In addition, the cover 24 is adapted by means of two cut-out portions 25, one at each side, so that it engages around the bar 22 when the cover 24 is in a closed position in order to lock the bar 22 in place within the hook 21.

In addition, the bar 22 comprises a lip 26 which, when the bar 22 is engaged in the hook 21 prevents disconnection of the bar 22 from the hook 21 and thereby the carrier 1 from the bicycle 2 other than by rotation of the carrier 1 upwards with respect to the bicycle 2, as shown in Fig. 8b. The lip 26 is centrally located along the bar 22 and locates into a cut-away portion 27 of the hook 21 to prevent the bar 22 moving forwards and disengaging from the hook 21 during use of the carrier 1. Only by rotating the supporting structure 3 upwards so that the lip 26 no longer engages in the cut-away portion 27 can the bar 22 be disengaged from the hook 21.

Hence, in use, in order to attach the carrier 1 to the bicycle, it is necessary first of all to fit the fixation means 5 and 18 to the bicycle 2. It is intended that these means 5 and 18, which are attached via screws to the frame of the bicycle 2 will be permanently attached thereto. In this way, the rest of the carrier 1 that comprises the main supporting structure 3 can be attached and detached to the bicycle 2 as and when required without the use of tools.

In order to attach the rest of the carrier 1 once the fixation means 5 and 18 are in place, first the bar 22 is located in the hook 21 and the supporting structure 3 is rotated downwardly so that the lip 26 engages in the cut-away portion 27 of the hook 21. The bight 11 of the connector 9 can then be located over and around the fixation means 5. Once this has been done, the carrier can be locked to the bicycle by closing the cover 24 so that the cut-out portions 25 engage the bar 22 and by snap-fitting the locking member 8 around the rear strut 7 to clamp the connector 9 to the stem 13 of mushroom-shaped pin 12.

Detachment of the carrier 1 can be accomplished by unfastening the locking member 8, opening the cover 24 and then rotating the supporting structure 3 upwards so that it disengages from the fixation means 5 and 18. Hence, the carrier 1 is readily attachable and detachable, as desired, from the bicycle without the use of tools.

As mentioned above, the supporting structure 3 may simply comprise a framework or platform but in particular is adapted to mount a child's seat, as will now be described with reference to Figs. 9 to 11.

As shown in Fig. 9, a first embodiment of child's seat comprises a conventional moulded plastics chair 28 which is secured to a mounting plate 29 beneath the seat portion thereof. The mounting plate 29 is hinged at its front end to a support plate 20 that forms an upper part of the supporting structure 3 of the carrier 1. Beneath the rear end of the mounting plate 29 is a suspension arrangement 31 for chair 28. The suspension arrangement 31 can be of any conventional type, such as a spring, resilient plastics block or other elastic member that damps movement of the chair 28 relative to the support plate 30 and therefore acts as a shock absorber. However, in addition, a dependent portion (not shown) of the arrangement 31 engages in an elongate slot 32 that is defined in the support plate 30. The slot 32 runs along part of the longitudinal axis towards the rear part of the plate 30 directly beneath the suspension arrangement 31. This arrangement enables the suspension arrangement to be moved back and forth relative to the support plate 30 and therefore the bicycle 2 as well as being elastically movable up and down. The suspension characteristic of the child's seat is therefore improved over conventional arrangements which typically only damp up and down movement relative to the bicycle.

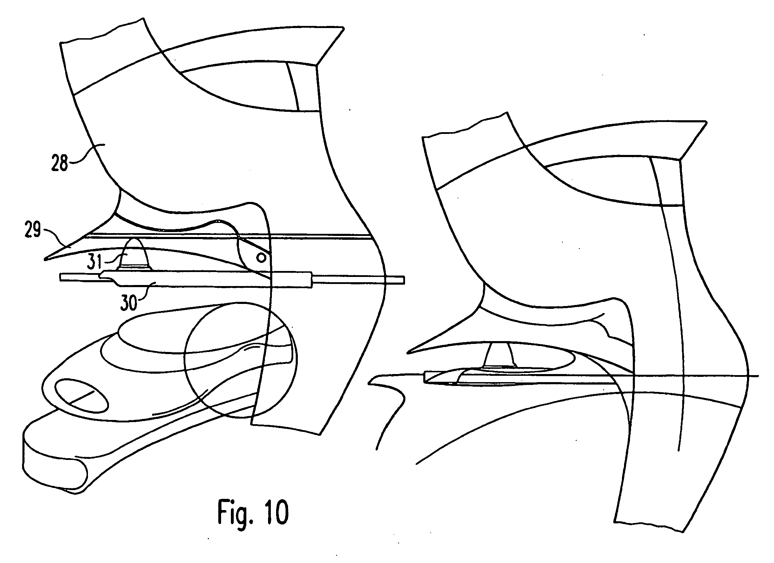

A second embodiment of child's seat is shown in Fig. 10. It will be appreciated that this is similar to the arrangement in Fig. 9 but here a dome-shaped shock-absorbing suspension arrangement 31 is mounted on the support plate 30 and supports on its summit the mounting plate 29. Again, the arrangement 31 is arranged to be movable relative to the support plate 30 in backwards and forwards directions as well as being elastically movable in up and down directions.

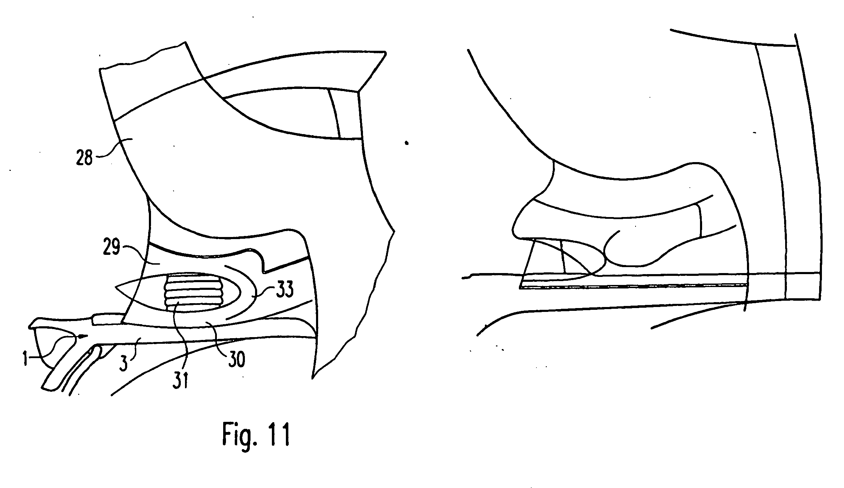

In a third embodiment of child' seat as shown in Fig. 11, the mounting plate 29 and the support plate 30 are integrally moulded in one piece so that they define a C-shape in vertical section and the shock-absorbing suspension arrangement 31 is located within the aperture defined by the C-shape. The support plate portion 30 of the one-piece moulding is then mounted on the supporting structure 3 of the carrier 1. The moulded hinge portion 33 between upper and lower parts of the C-shape is flexible so that the seat 28 can rock relative to the lower support plate portion 30 in a similar fashion to the back and forth movement provided by the first and second embodiments shown in Figs. 9 and 10. Hence, the child's seat again provides an improved suspension characteristic over conventional arrangements.

## Claims

1. A carrier (1) for a bicycle (2) comprising a supporting structure (3) to which an object to be carried can be secured; and
support means (4) for the supporting structure (3) which can be connected to the bicycle; and
a first fixation means (5), securable to a bicycle, whereby the support means (4) is releasably connectable manually to the first fixation means (5),
wherein the supporting structure (3) comprises a support plate (30) and a mounting plate (29), and wherein a chair (28) for a child is mountable to the mounting plate (29), further
a suspension arrangement (31) is located between the support plate (30) and the mounting plate (29),
**characterised in that**:
the mounting plate (29) is rotatably connected to the support plate, and the suspension arrangement (31) is relatively movable longitudinally with respect to the support plate (30).

2. A carrier as claimed in Claim 1, **characterised in that** the first fixation means (5) is adapted for permanent fitment to the bicycle (2).

3. A carrier as claimed in Claim 2, **characterised in that** the first fixation means (5) comprises a projecting mushroom-shaped pin (12, 13).

4. A carrier as claimed any of Claims 1 to 3, **characterised in that** the support means (4) is releasably connectable to the first fixation means (5) by manual rotation of a locking member (8).

5. A carrier as claimed in any of Claims 1 to 4, **characterised in that** the support means (4) comprises two angled supporting struts (7).

6. A carrier as claimed in Claim 5, **characterised in that** the ends of the supporting struts (7) are connected to the front and rear of the supporting structure (3), respectively.

7. A carrier as claimed in Claim 6, **characterised in that** the other ends of the supporting struts (7) are connected to the locking member (8).

8. A carrier as claimed in Claim 7, **characterised in that** the other ends of the supporting struts (7) are connected to the locking member (8) via a connector (9).

9. A carrier as claimed in Claim 8, **characterised in that** the locking member (8) is rotatably secured to the connector (9).

10. A carrier as claimed in any of Claims 7 to 9, **characterised in that** the locking member (8) snap fits around one of the struts (7) to lock the supporting struts (7) to the first fixation means (5).

11. A carrier as claimed in Claim 10, **characterised in that** the locking member (8) comprises a lug (17) which, on rotation of the locking member (8) to connect the support means (4) to the first fixation means (5), is moved into a position beneath the first fixation means (5) in order to clamp the first fixation means between the lug (17) and the connector (9).

12. A carrier as claimed in any of Claims 1 to 11, **characterised in that** a front or rear side of the supporting structure (3) is releasably attachable to a second fixation means (18).

13. A carrier as claimed in Claim 12, **characterised in that** the second fixation means (18) is adapted for permanent fitment to the bicycle.

14. A carrier as claimed in Claim 13, **characterised in that** the front or rear side of the supporting structure (3) comprises a projecting means (20) that together with the second fixation means (18) form a hooking arrangement whereby the supporting structure (3) can be releasably secured to the bicycle.

15. A carrier as claimed in Claim 14, **characterised in that** the projecting means (20) comprises a bar (22) and the second fixation means (18) comprises a hook (21) in which the bar (22) can be engaged.

16. A carrier as claimed in Claim 15, **characterised in that** the bar (22) comprises a lip (26) which, when the bar (22) is engaged in the hook (21) prevents disconnection of the bar (22) and thereby the carrier (1) from the bicycle other than by rotation of the carrier (1) upwards with respect to the bicycle.

17. A carrier as claimed in any of Claims 14 to 16, **characterised in that** the hooking arrangement is locked in place by a hinged cover (24).

18. A carrier as claimed in Claim 17, **characterised in that** the hinged cover (24) is rotatably secured to the second fixation means (18).

19. A carrier as claimed in Claim 17 or Claim 18, **characterised in that** the bar (22) can only be disengaged from the hook (21) when the cover (24) is in an open position.

20. A carrier as claimed in any of Claims 17 to 19, **characterised in that** the hinged cover (24) is adapted to engage the bar (22) when the cover (24) is in a closed position to lock the bar (22) in place within the hook (21).

21. A carrier as claimed in any of Claims 1 to 20, **characterised in that** the suspension arrangement (31) is mounted on the supporting structure (3) such that the chair (28) can move back and forth relative to the supporting structure (3) in order to change its suspension characteristic.

22. A carrier as claimed in any of Claims 1 to 21, **characterised in that** the mounting plate (29) is hingedly connected to the support plate (30).

23. A carrier as claimed in any of Claims 1 to 21, **characterised in that** the mounting plate (29) and the support plate (30) are integrally moulded in one piece.

24. A carrier as claimed in Claim 23, **characterised in that** the mounting plate (29) and the support plate (30) define a C-shaped profile.

25. A carrier as claimed in any of Claims 1 to 24, **characterised in that** the support plate (30) defines an elongate slot (32) along part of its longitudinal axis in which a portion of the suspension arrangement (31) is engaged such that it can be moved back and forth relative to the support plate (30).

26. A carrier as claimed in any of Claims 1 to 25, **characterised in that** the suspension arrangement (31) comprises a spring or other elastic member.

## Patentansprüche

1. Träger (1) für ein Fahrrad (2), eine Tragstruktur (3) umfassend, an der ein zu transportierendes Objekt befestigt werden kann; und
eine Halterungseinrichtung (4) für die Tragstruktur (3), die an das Fahrrad angeschlossen werden kann; und
eine erste an dem Fahrrad befestigbare Fixierungseinrichtung (5), wodurch die Halterungseinrichtung (4) manuell lösbar an der ersten Fixierungseinrichtung (5) anschließbar ist,
wobei die Tragstruktur (3) eine Tragplatte (30) und eine Montageplatte (29) umfasst, und wobei ein Sitz (28) für ein Kind an der Montageplatte (29) montiert werden kann, darüber hinaus
eine Hängeanordnung (31) zwischen der Tragplatte (30) und der Montageplatte (29) angeordnet ist,
**dadurch gekennzeichnet, dass**
die Montageplatte (29) drehbeweglich an die Tragplatte angeschlossen ist, und die Hängeanordnung (31) der Länge nach in Bezug auf die Tragplatte (30) relativ beweglich ist.

2. Träger nach Anspruch 1, **dadurch gekennzeichnet, dass** die erste Fixierungseinrichtung (5) zur permanenten Anbringung am Fahrrad (2) ausgelegt ist.

3. Träger nach Anspruch 2, **dadurch gekennzeichnet, dass** die erste Fixierungseinrichtung (5) einen vorstehenden pilzförmigen Stift (12, 13) umfasst.

4. Träger nach einem der Ansprüche 1 bis 3, **dadurch gekennzeichnet, dass** die Halterungseinrichtung (4) an der ersten Fixierungseinrichtung (5) durch manuelle Drehung eines Verriegelungsteils (8) lösbar anschließbar ist.

5. Träger nach einem der Ansprüche 1 bis 4, **dadurch gekennzeichnet, dass** die Halterungseinrichtung (4) zwei abgewinkelte Tragstreben (7) umfasst.

6. Träger nach Anspruch 5, **dadurch gekennzeichnet, dass** die Enden der Tragstreben (7) an die Vorder- bzw. Rückseite der Tragstruktur (3) angeschlossen sind.

7. Träger nach Anspruch 6, **dadurch gekennzeichnet, dass** die anderen Enden der Tragstreben (7) an das Verriegelungsteil (8) angeschlossen sind.

8. Träger nach Anspruch 7, **dadurch gekennzeichnet, dass** die anderen Enden der Tragstreben (7) über einen Verbinder (9) an das Verriegelungsteil (8) angeschlossen sind.

9. Träger nach Anspruch 8, **dadurch gekennzeichnet, dass** das Verriegelungsteil (8) drehbeweglich am Verbinder (9) befestigt ist.

10. Träger nach einem der Ansprüche 7 bis 9, **dadurch gekennzeichnet, dass** das Verriegelungsteil (8) um eine der Streben (7) herum einrastet, um die Tragstreben (7) an der ersten Fixierungseinrichtung (5) zu arretieren.

11. Träger nach Anspruch 10, **dadurch gekennzeichnet, dass** das Verriegelungsteil (8) einen Ansatz (17) umfasst, der bei einer Drehung des Verriegelungsteils (8) zum Anschluss der Halterungseinrichtung (4) an der ersten Fixierungseinrichtung (5) an eine Position unter der ersten Fixierungseinrichtung (5) bewegt wird, um die erste Fixierungseinrichtung zwischen dem Ansatz (17) und dem Verbinder (9) festzuklemmen.

12. Träger nach einem der Ansprüche 1 bis 11, **dadurch gekennzeichnet, dass** eine Vorder- oder Rückseite der Tragstruktur (4) lösbar an einer zweiten Fixierungseinrichtung (18) anbringbar ist.

13. Träger nach Anspruch 12, **dadurch gekennzeichnet, dass** die zweite Fixierungseinrichtung (18) zur permanenten Anbringung am Fahrrad ausgelegt ist.

14. Träger nach Anspruch 13, **dadurch gekennzeichnet, dass** die Vorder- oder Rückseite der Tragstruktur (3) eine vorspringende Einrichtung (20) umfasst, die zusammen mit der zweiten Fixierungseinrichtung (18) eine Einhakanordnung bildet, wodurch die Tragstruktur (3) lösbar am Fahrrad befestigt werden kann.

15. Träger nach Anspruch 14, **dadurch gekennzeichnet, dass** die vorspringende Einrichtung (20) einen Riegel (22) umfasst, und die zweite Fixierungseinrichtung (18) einen Haken (21) umfasst, in den der Riegel (22) eingreifen kann.

16. Träger nach Anspruch 15, **dadurch gekennzeichnet, dass** der Riegel (22) eine Lippe (26) umfasst, die, wenn der Riegel (22) im Haken (21) in Eingriff ist, ein Lösen des Riegels (22) und dadurch des Trägers (1) vom Fahrrad verhindert, außer der Träger (1) wird im Hinblick auf das Fahrrad nach oben gedreht.

17. Träger nach einem der Ansprüche 14 bis 16, **dadurch gekennzeichnet, dass** die Einhakanordnung durch eine angelenkte Abdeckung (24) an Ort und Stelle arretiert wird.

18. Träger nach Anspruch 17, **dadurch gekennzeichnet, dass** die angelenkte Abdeckung (24) drehbeweglich an der zweiten Fixierungseinrichtung (18) befestigt ist.

19. Träger nach Anspruch 17 oder 18, **dadurch gekennzeichnet, dass** der Riegel (22) nur aus dem Haken (21) freigesetzt werden kann, wenn sich die Abdeckung (24) in einer offenen Position befindet.

20. Träger nach einem der Ansprüche 17 bis 19, **dadurch gekennzeichnet, dass** die angelenkte Abdeckung (24) dazu ausgelegt ist, den Riegel (22) in Eingriff zu nehmen, wenn die Abdeckung (24) in einer geschlossenen Position ist, um den Riegel (22) im Haken (21) an Ort und Stelle zu arretieren.

21. Träger nach einem der Ansprüche 1 bis 20, **dadurch gekennzeichnet, dass** die Hängeanordnung (31) so an der Tragstruktur (3) angebracht ist, dass sich der Sitz (28) in Bezug auf die Tragstruktur (3) nach hinten und vorn bewegen kann, um seine Hängeeigenschaft zu verändern.

22. Träger nach einem der Ansprüche 1 bis 21, **dadurch gekennzeichnet, dass** die Montageplatte (29) an die Tragplatte (30) angelenkt ist.

23. Träger nach einem der Ansprüche 1 bis 21, **dadurch gekennzeichnet, dass** die Montageplatte (29) und die Tragplatte (30) integral in einem Stück geformt sind.

24. Träger nach Anspruch 23, **dadurch gekennzeichnet, dass** die Montageplatte (29) und die Tragplatte (30) ein C-förmiges Profil bilden.

25. Träger nach einem der Ansprüche 1 bis 24, **dadurch gekennzeichnet, dass** die Tragplatte (30) einen Längsschlitz (32) entlang eines Teils ihrer Längsachse bildet, in dem ein Abschnitt der Hängeanordnung (31) so in Eingriff ist, dass sie in Bezug auf die Tragplatte (30) nach hinten und vorn bewegt werden kann.

26. Träger nach einem der Ansprüche 1 bis 25, **dadurch gekennzeichnet, dass** die Hängeanordnung (31) eine Feder oder ein anderes elastisches Teil umfasst.

## Revendications

1. Porte-bagages (1) pour une bicyclette (2) comportant une structure porteuse (3) sur laquelle un objet à transporter peut être fixé ; et
un moyen de support (4) pour la structure porteuse (3) qui peut être relié à la bicyclette ; et
un premier moyen de fixation (5), pouvant être fixé sur une bicyclette, de telle sorte que le moyen de support (4) peut être relié manuellement de manière amovible au premier moyen de fixation (5),
dans lequel la structure porteuse (3) comprend une plaque de support (30) et une plaque de montage (29), et dans lequel un siège (28) pour un enfant peut être monté sur la plaque de montage (29), en outre,
un agencement de suspension (31) est situé entre la plaque de support (30) et la plaque de montage (29),
**caractérisé en ce que** :
la plaque de montage (29) peut être couplée par rotation à la plaque de support, et l'agencement de suspension (31) peut être relativement déplacé longitudinalement par rapport à la plaque de support (30).

2. Porte-bagages selon la revendication 1, **caractérisé en ce que** le premier moyen de fixation (5) est adapté pour être fixé de façon permanente à la bicyclette (2).

3. Porte-bagages selon la revendication 2, **caractérisé en ce que** le premier moyen de fixation (5) comporte une goupille en forme de champignon en saillie (12, 13).

4. Porte-bagages selon l'une quelconque des revendications 1 à 3, **caractérisé en ce que** le moyen de support (4) peut être couplé de manière amovible au premier moyen de fixation (5) par rotation manuelle d'un élément de verrouillage (8).

5. Porte-bagages selon l'une quelconque des revendications 1 à 4, **caractérisé en ce que** le moyen de support (4) comprend deux traverses porteuses inclinées (7).

6. Porte-bagages selon la revendication 5, **caractérisé en ce que** les extrémités des traverses porteuses (7) sont couplées respectivement à l'avant et l'arrière de la structure porteuse (3).

7. Porte-bagages selon la revendication 6, **caractérisé en ce que** les autres extrémités des traverses porteuses (7) sont couplées à l'élément de verrouillage (8).

8. Porte-bagages selon la revendication 7, **caractérisé en ce que** les autres extrémités des traverses porteuses (7) sont couplées à l'élément de verrouillage (8) par l'intermédiaire d'un élément de liaison (9).

9. Porte-bagages selon la revendication 8, **caractérisé en ce que** l'élément de verrouillage (8) est fixé par rotation sur l'élément de liaison (9).

10. Porte-bagages selon l'une quelconque des revendications 7 à 9, **caractérisé en ce que** l'élément de verrouillage (8) est assemblé par encliquetage autour de l'une des traverses (7) afin de verrouiller les traverses porteuses (7) sur le premier moyen de fixation (5).

11. Porte-bagages selon la revendication 10, **caractérisé en ce que** l'élément de verrouillage (8) comporte une patte (17) qui, lors de la rotation de l'élément de verrouillage (8) afin de coupler le moyen de support (4) au premier moyen de fixation (5), est déplacée vers une position au-dessous du premier moyen de fixation (5) afin de maintenir le premier moyen de fixation entre la patte (17) et l'élément de liaison (9).

12. Porte-bagages selon l'une quelconque des revendications 1 à 11, **caractérisé en ce qu'**un côté avant ou arrière de la structure porteuse (4) peut être relié de manière amovible à un second moyen de fixation (18).

13. Porte-bagages selon la revendication 12, **caractérisé en ce que** le second moyen de fixation (18) est adapté pour être fixé de façon permanente de la bicyclette.

14. Porte-bagages selon la revendication 13, **caractérisé en ce que** le côté avant ou arrière de la structure porteuse (3) comporte un moyen en saillie (20) qui ensemble avec le second moyen de fixation (18) forme un agencement d'accrochage de telle sorte que la structure porteuse (3) peut être fixée de manière amovible sur la bicyclette.

15. Porte-bagages selon la revendication 14, **caractérisé en ce que** le moyen en saillie (20) comprend une barre (22) et le second moyen de fixation (18) comprend un crochet (21) dans lequel la barre (22) peut être introduite.

16. Porte-bagages selon la revendication 15, **caractérisé en ce que** la barre (22) comporte une lèvre (26) qui, lorsque la barre (22) est introduite dans le crochet (21) empêche la séparation de la barre (22) et ainsi, du support (1), par rapport à la bicyclette autrement que par la rotation du support (1) vers le haut par rapport à la bicyclette.

17. Porte-bagages selon l'une quelconque des revendications 14 à 16, **caractérisé en ce que** l'agencement d'accrochage est verrouillé en place par un couvercle articulé (24).

18. Porte-bagages selon la revendication 17, **caractérisé en ce que** le couvercle articulé (24) est fixé par rotation sur le second moyen de fixation (18).

19. Porte-bagages selon la revendication 17 ou la revendication 18, **caractérisé en ce que** la barre (22) peut seulement être séparée du crochet (21) lorsque le couvercle (24) est en position ouverte.

20. Porte-bagages selon l'une quelconque des revendications 17 à 19, **caractérisé en ce que** le couvercle articulé (24) est adapté de manière à se coupler à la barre (22) lorsque le couvercle (24) est en position fermée afin de verrouiller la barre (22) en place à l'intérieur du crochet (21).

21. Porte-bagages selon l'une quelconque des revendications 1 à 20, **caractérisé en ce que** l'agencement de suspension (31) est monté sur la structure porteuse (3) de telle sorte que le siège (28) peut se déplacer d'avant en arrière par rapport à la structure porteuse (3) afin de modifier sa caractéristique de suspension.

22. Porte-bagages selon l'une quelconque des revendications 1 à 21, **caractérisé en ce que** la plaque de montage (29) est couplée de manière articulée à la plaque de support (30).

23. Porte-bagages selon l'une quelconque des revendications 1 à 21, **caractérisé en ce que** la plaque de montage (29) et la plaque de support (30) sont moulées de manière intégrale en une seule pièce.

24. Porte-bagages selon la revendication 23, **caractérisé en ce que** la plaque de montage (29) et la plaque de support (30) définissent un profil en forme de C.

25. Porte-bagages selon l'une quelconque des revendications 1 à 24, **caractérisé en ce que** la plaque de support (30) définit une fente allongée (32) le long d'une partie de son axe longitudinal dans laquelle une partie de l'agencement de suspension (31) est couplée de telle sorte qu'elle peut être déplacée d'avant en arrière par rapport à la plaque de support (30).

26. Porte-bagages selon l'une quelconque des revendications 1 à 25, **caractérisé en ce que** l'agencement de suspension (31) comprend un ressort ou autre élément élastique.
